# EUROPEAN PATENT SPECIFICATION

(11) **EP 1 983 474 B1**
(45) Date of publication and mention of the grant of the patent: **12.10.2011**
(21) Application number: 06799639.7
(22) Date of filing: 08.08.2006
(51) Int. Cl.: G06K 19/18

(54) **PLASTIC CARD PROVIDED WITH ELECTRIC CONTACTS**
MIT ELEKTRISCHEN KONTAKTEN AUSGESTATTETE KUNSTSTOFFKARTE
CARTE PLASTIQUE MUNIE DE CONTACTS ÉLECTRIQUES

(30) Priority: 09.02.2006 RU 2006103867
(43) Date of publication of application: 22.10.2008
(73) Proprietor: Balchaytis, Vadim Evgenevich, Omsk 644090 (RU)
(72) Inventor: Balchaytis, Vadim Evgenevich, Omsk 644090 (RU)
(74) Representative: Bucher, Ralf Christian
(86) International application number: PCT/RU2006/000418
(87) International publication number: WO 2007/091914

(56) References cited:
- EP-A2- 1 429 283
- WO-A-2005/066886
- WO-A2-2005/124932
- FR-A- 2 595 848
- RU-A- 96 117 590
- US-A1- 2002 040 935
- US-B1- 6 748 541
- US-B1- 6 883 718

## Description

### Technical Field of the Invention

The invention relates to storage media devices such as plastic cards having electrical contacts and embedded microcircuits.

### Technical Background

A prior art plastic card described in U.S. Patent No. 6,715,678 of April 6, 2004, which has electrical contacts and an embedded microcircuit, is designed to be inserted into a port of an external reading device. The prior art card (closest prior art of the first embodiment of this invention) is disadvantageous because it requires an intermediate reading device to be inserted into the USB interface of a computer.

Another prior art plastic (memory) card disclosed in U.S. Patent No. 6,883,718 of April 26, 2005, which has electrical contacts and an embedded microcircuit, is designed to be inserted into the interface socket of an external reading device, in particular, the USB interface of a computer. The prior art memory card (closest prior art of the first embodiment of this invention) is disadvantageous because its portion intended for insertion into a USB interface has a thickness differing from that of the remaining, portion of the card, creating inconveniences when the memory card is used, for example, as a visiting card or as a storage card.

Yet another plastic card described in International Application WO 2005/124932 of December 29, 2005, has electrical contacts and an embedded microcircuit and can be folded and inserted in a folded state into the interface socket of an external reading device. The prior art card (closest prior art of the first embodiment of this invention) is disadvantageous because its electrical contacts are not resilient enough when inserted into the interface socket of the external reading device and cannot ensure a reliable contact fit. Another disadvantage of the prior art card is that its applications are restricted by its lateral dimensions, that is, the card cannot be wider than the socket of the matching interface of the external reading device.

The plastic card described in U.S. Patent No 6,715,678 of April 6, 2004, has electrical contacts and an embedded microcircuit on one side of the card made in the form of a strip to be inserted into the interface of an external reading device. The card (which is the closest prior art of the second embodiment of this invention) is disadvantageous because it requires an intermediate reading device to be inserted into the USB interface of a computer.

A still further plastic card is disclosed in EP No. 1,429,283 of April 6, 2004, which forms the preamble of claim 1. The disclosed card has electrical contacts and an embedded microcircuit on one side of the card that is made in the form of a strip to be inserted into the interface socket of an external reading device. The prior art card is disadvantageous because it has a thickness matching a USB port, requiring extra quantities of material and besides it does not conform to the accepted thickness standards of cards used, for example, as visiting cards.

US2002/040935A1, W02005/066886A, and FR-A-2595848 disclose plastic cards with electric contacts and an embedded microcircuit (smart cards). The plastic cards are provided with a fold line and can be folded along the fold line.

### Description of the Invention

The invention is specified in claim 1. Further embodiments of the invention are specified in the dependent claims.

The claimed invention is designed to allow information to be read from plastic cards commonly used for various purposes directly through the interface of an external reading device, and, in particular, through the USB interface of a computer, requiring a medium provided with electrical contacts to be inserted into the interface and having a thickness several times the thickness of the plastic card. As a result, the electrical contacts of the card are pressed firmly against the USB interface contacts by increasing the resilience of the flexible electrical contacts and/or selecting an adequate number of folds of the plastic card to be inserted into the USB interface.

This technical effect is achieved in a plastic card having electrical contacts and an embedded microcircuit and insertable in a folded state into the interface socket of an external reading device. The card itself is provided with a groove or grooves along the fold line, and the electrical contacts are arranged relative to the folding line in a way that allows them to be connected to the contacts of the interface of the external reading device when the card is inserted into the socket thereof from the fold side. To put it differently, the electrical contacts are arranged relative to the fold line so as to be connected to the contacts of the external reading device interface when the card is inserted into the socket thereof from the fold side.

The plastic card can be provided with a coating to prevent its cracking on folding. Coating can be applied in the form of a strip extending along the fold line.

The plastic card can have several parallel folds to be inserted in a multiple-fold state into the interface socket of an external reading device.

The grooves along the fold line can be provided by various methods. The plastic card can have perforations or cuts along the fold line. The plastic card may further be provided with recesses along the fold line.

The above technical effect is achieved in a plastic card having electrical contacts and an embedded microcircuit provided on the card portion that is inserted into the interface socket of an external reading device. The plastic card portion inserted into the interface socket of the external reading device can be provided with a groove or grooves along the fold line, and the electrical contacts are arranged relative to the fold line so as to be connected to the contacts of the external reading device interface when the folded portion of the card is inserted into the socket thereof from the fold side. In other words, the electrical contacts are arranged relative to the fold line in such a way as to be connected to the interface contacts of the external reading device upon insertion into the socket thereof.

The plastic card portion having electrical contacts and an embedded microcircuit can be designed as a strip that can be reshaped into several parallel folds and be inserted, in a multiple-fold state, into the interface socket of an external reading device.

The plastic card portion that is inserted into the interface socket of an external reading device is recessed along the fold line.

The plastic card portion that is inserted into the interface socket of an external reading device can be provided with a coating to prevent its cracking on folding.

### Brief Description of the Drawings

Fig. 1 is a view of the plastic card having electrical contacts and an embedded microcircuit.
Fig. 2 is a view of the plastic card folded for insertion from the fold side into the socket of a USB interface.
Fig. 3 is a view of the plastic card with a strip folded out for insertion into the socket of a USB interface.

### Performance of the Invention

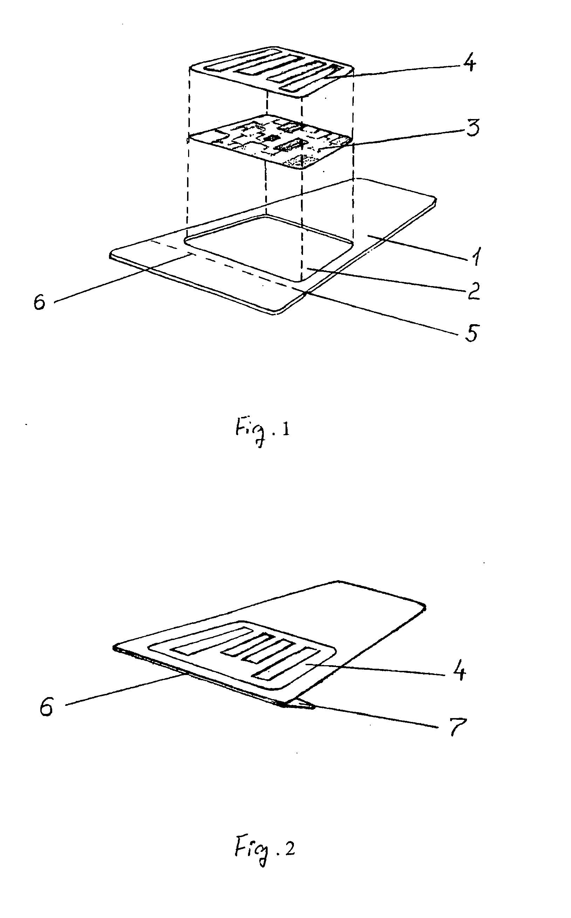

Fig. 1 illustrates a plastic card 1 made of polyvinylchloride and provided with a slot 2 for a microcircuit (chip) 3, in particular, a microprocessor, to be embedded therein. A contact group 4 is placed above the microcircuit. The plastic card has a groove in the form of a recess (cut) 5 on the surface thereof along a fold line 6. As shown in Fig. 2, the plastic card is in a folded state, in which it can be inserted into the socket of a USB interface. Recess 5 defines the position of fold line 6 on the plastic card. For this purpose, too, the recesses can be replaced with several grooves in the form of card perforations along the fold line or cuts on the opposite sides of the card. Contacts 4 are arranged relative to the fold line so that when the plastic card is inserted from the fold side into the socket of the USB interface the contacts are connected to the contacts of the USB interface. In this position, the fold line is pressed against the wall of the socket of the USB interface.

To prevent card cracking along the fold line after multiple insertions into the interface socket, it can be coated with an elastic and tension-resistant material such as polyethylene or polypropylene. The coating can be applied as a strip covering fold line 6.

The plastic card fits into the socket of the USB interface owing to the folded portion 7 (Fig. 2) of the card that provides the required thickness to flexibly press contacts 4 against the contacts of the USB interface. The thickness of the plastic card folded twice or a larger number of times can be selected to provide reliable fitting of its contacts in the interface socket.

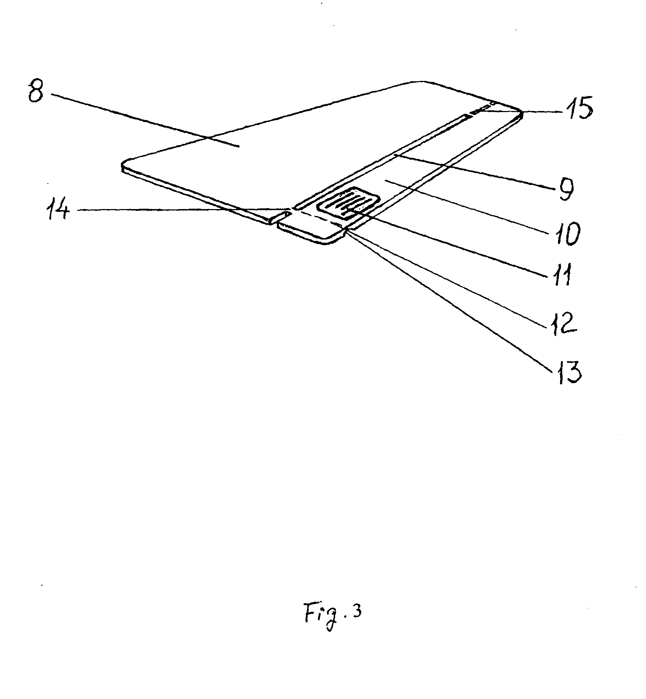

Fig. 3 illustrates a plastic card 8 having a cut 9 separating a portion of the card in the form of a strip 10 provided with electrical contacts 11. Strip 10 insertable into the USB interface can be folded out away from the remaining portion of the card and be folded along a fold line 12 defined by a groove 13. Strip 10 is held in normal position before use by a bridge 14. Strip 10 can be detached from the rest of the card along perforations 15 and be used separately thereafter.

Applications of plastic cards manufactured in accordance with this invention depend on the type of microcircuit embedded therein. Applications such as visiting cards, labels, or insertions in published materials suggest storage and reading of relatively small volumes of information, whereas smart card applications require a microprocessor to be embedded into the card. In both instances, though, this invention allows a card user to rely on an ordinary computer to perform required operations.

## Claims

1. A plastic card (1; 8) having electrical contacts (4; 11) and an embedded microcircuit (3) and insertable in a folded state into the interface socket of an external reading device, wherein the plastic card is provided with a fold line (6; 12) and the electrical contacts thereof are arranged relative to the fold line,
**characterized in that**
the interface socket of the external reading device is the socket of a USB interface and
the plastic card is provided with a groove or grooves (5; 13) along the fold line and the electrical contacts are arranged relative to the fold line so as to be connected to the contacts of the USB interface of the external reading device on insertion of a folded portion of the card into the socket of the USB interface from the fold side of the folded portion.

2. A plastic card of claim 1, wherein the plastic card is provided with a coating to protect it against cracking on folding.

3. A plastic card of claim 2, wherein the coating is applied in the form of a strip along the fold line.

4. A plastic card of claim 1, wherein the plastic card is designed to be reshaped into several parallel folds and be inserted, in a multiple-fold state, into the socket of the USB interface of the external reading device.

5. A plastic card of claim 1, wherein the plastic card is provided with perforations along the fold line.

6. A plastic card of claim 1, wherein the plastic card is provided with cuts (9) along the fold line (12).

7. A plastic card of claim 1, wherein the plastic card is provided with a recess (5) along the fold line (6).

8. A plastic card of any of the preceding claims and having electrical contacts and an embedded microcircuit provided on the portion (10) of the card (8) that is inserted into the socket of the USB interface of the external reading device, wherein the portion (10) of the plastic card (8) that is insertable into the socket of the USB interface of the external reading device is provided with a recess (13) or recesses along the fold line (12), and the electrical contacts thereof are arranged relative to the fold line (12) to be connected to the contacts of the USB interface of the external reading device on insertion of the folded portion (10) of the card (8) into the socket of the USB interface.

9. A plastic card of claim 8, wherein the portion of the plastic card having the electrical contacts and the embedded microcircuit is a strip (10) that can be reshaped into several parallel folds and inserted, in a multiple-fold state, into the socket of the USB interface of the external reading device.

10. A plastic card of claim 8, wherein the portion (10) of the plastic card (8) that is insertable into the socket of the USB interface of the external reading device has a recess (13) along the fold line (12).

11. A plastic card of claim 1, wherein the portion of the plastic card that is insertable into the interface socket of the external reading device is provided with a coating to prevent its cracking on folding.

## Patentansprüche

1. Eine Plastikkarte (1; 8), die elektrische Kontakte (4; 11) und einen eingebetteten Mikroschaltkreis (3) aufweist und in einem gefalteten Zustand in die Schnittstellen-Buchse eines externen Lesegerätes einführbar ist, wobei die Plastikkarte mit einer Falzlinie (6; 12) versehen ist und die elektrischen Kontakte davon relativ zur Falzlinie angeordnet sind,
**dadurch gekennzeichnet, dass**
die Schnittstellen-Buchse des externen Lesegeräts die Buchse einer USB-Schnittstelle ist, und die Plastikkarte mit einer Kerbe oder Kerben (5; 13) entlang der Falzlinie versehen ist, und die elektrischen Kontakte relativ zur Falzlinie angeordnet sind, sodass sie mit den Kontakten der USB-Schnittstelle des externen Lesegeräts verbunden werden beim Einschieben eines gefalteten Abschnitts der Karte in die Buchse der USB-Schnittstelle von der gefalteten Seite des gefalteten Abschnitts aus.

2. Eine Plastikkarte nach Anspruch 1, wobei die Plastikkarte mit einer Beschichtung versehen ist, um sie vor Reißen beim Falten zu schützen.

3. Eine Plastikkarte nach Anspruch 2, wobei die Beschichtung in Form eines Streifens entlang der Falzlinie aufgebracht ist.

4. Eine Plastikkarte nach Anspruch 1, wobei die Plastikkarte gestaltet ist, um in mehrere parallele Faltungen umgeformt und in einem mehrfach gefalteten Zustand in die Buchse der USB-Schnittstelle des externen Lesegeräts eingeführt zu werden.

5. Eine Plastikkarte nach Anspruch 1, wobei die Plastikkarte mit Perforationen entlang der Falzlinie versehen ist.

6. Eine Plastikkarte nach Anspruch 1, wobei die Plastikkarte mit Schnitten (9) entlang der Falzlinie versehen ist.

7. Eine Plastikkarte nach Anspruch 1, wobei die Plastikkarte mit einer Ausnehmung (5) entlang der Falzlinie versehen ist.

8. Eine Plastikkarte nach einem der vorhergehenden Ansprüche, die elektrische Kontakte und einen eingebetteten Mikroschaltkreis aufweist, die auf dem Abschnitt (10) der Karte (8) vorgesehen sind, der in die Buchse der USB-Schnittstelle des externen Lesegerätes eingeführt wird, wobei der Abschnitt (10) der Plastikkarte (8), der in die Buchse der USB-Schnittstelle des externen Lesegerätes einführbar ist, mit einer Ausnehmung (13) oder Ausnehmungen entlang der Falzlinie (12) versehen ist, und die elektrischen Kontakte davon relativ zur Falzlinie angeordnet sind, um mit den Kontakten der USB-Schnittstelle des externen Lesegeräts beim Einschieben des gefalteten Abschnitts (10) der Karte (8) in die Buchse der USB-Schnittstelle verbunden zu werden.

9. Eine Plastikkarte nach Anspruch 8, wobei der Abschnitt der Plastikkarte, der elektrische Kontakte und die eingebetteten Mikroschaltkreis aufweist, in mehrere parallele Faltungen umgeformt und in einem mehrfach gefalteten Zustand in die Buchse der USB-Schnittstelle des externen Lesegeräts eingeführt werden kann.

10. Eine Plastikkarte nach Anspruch 8, wobei der Abschnitt (10) der Plastikkarte (8), der in die Buchse der USB-Schnittstelle des externen Lesegeräts eingeführt werden kann, eine Ausnehmung (13) entlang der Falzlinie (12) aufweist.

11. Eine Plastikkarte nach Anspruch 1, wobei der Abschnitt der Plastikkarte, der in die Buchse der USB-Schnittstelle des externen Lesegeräts eingeführt werden kann, mit einer Beschichtung versehen ist, um Reißen beim Falten zu verhindern.

## Revendications

1. Une carte en plastique (1; 8) ayant des contacts électriques (4; 11) et un microcircuit intégré (3) et insérables dans un état replié dans la prise d'interface d'un dispositif de lecture externe, dans lequel la carte en plastique est fourni avec une ligne de pliage (6; 12) et les contacts électriques de celui-ci sont disposées par rapport à la ligne de pliage,
**caractérisé en ce que**
la prise d'interface d'un dispositif de lecture externe est la prise d'une interface USB et la carte en plastique est fourni avec une ou les rainures (5; 13) le long de la ligne de pliage et les contacts électriques sont disposés par rapport à la ligne de pliage de façon à être connectées aux contacts de l'interface USB d'un dispositif de lecture externe sur l'insertion des une partie repliée de la carte dans la prise de l'interface USB du côté pli de la partie repliée.

2. Une carte en plastique de la revendication 1, dans lequel la carte en plastique est fourni avec un revêtement pour le protéger contre les fissures sur le pliage.

3. Une carte en plastique de la revendication 2, dans lequel le revêtement est appliqué sous la forme d'une bande le long de la ligne de pliage.

4. Une carte en plastique de la revendication 1, dans lequel la carte en plastique est conçu pour être remodelé en plusieurs plis parallèles et d'être inséré dans un état de multiples fois, dans l'interface USB d'un dispositif de lecture externe.

5. Une carte en plastique de la revendication 1, dans lequel la carte en plastique est fourni avec des perforations le long de la ligne de pliage.

6. Une carte en plastique de la revendication 1, dans lequel la carte en plastique est fourni avec des coupes (9) le long de la ligne de pliage (12).

7. Une carte en plastique de la revendication 1, dans lequel la carte en plastique est fourni avec un évidement (5) le long de la ligne de pliage (6).

8. Une carte en plastique selon l'une quelconque des revendications précédentes et ayant des contacts électriques et un microcircuit intégré fourni sur la portion (10) de la carte (8) qui est insérée dans la prise d'interface USB d'un dispositif de lecture externe, dans lequel la portion (10) de la carte en plastique (8) qui est inséré dans la prise d'interface USB d'un dispositif de lecture externe est fourni avec une ou des évidements (13) le long de la ligne de pliage (12), et les contacts électriques de celui-ci sont disposées par rapport à la ligne de pliage (12) d'être connecté à des contacts d'interface USB d'un dispositif de lecture externe sur l'insertion des la partie pliée (10) de la carte (8) dans la prise d'interface USB.

9. Une carte en plastique de la revendication 8, dans lequel la portion de la carte plastique ayant les contacts électriques et le microcircuit intégré est une bande (10) qui peut être remodelée en plis parallèles de plusieurs et inséré dans un état de multiples fois, dans la prise d'interface USB d'un dispositif de lecture externe.

10. Une carte en plastique de la revendication 8, dans lequel la portion (10) de la carte (8) en plastique qui est inséré dans la prise d'interface USB d'un dispositif de lecture externe a une niche (13) le long de la ligne de pliage (12).

11. Une carte en plastique de la revendication 1, dans lequel la portion de la carte en plastique qui est inséré dans la prise d'interface USB d'un dispositif de lecture externe est pourvue d'un revêtement pour empêcher sa fissuration sur le repliement.
